# EUROPEAN PATENT APPLICATION

(11) **EP 2 045 860 A1**
(43) Date of publication of application: **08.04.2009**
(21) Application number: 07745526.9
(22) Date of filing: 13.06.2007
(51) Int. Cl.: H01M 8/02

(54) **TUBE-TYPE SOLID POLYMER FUEL CELL AND METHOD FOR MANUFACTURING TUBE-TYPE SOLID POLYMER FUEL CELL**

(30) Priority: 14.06.2006 JP 2006164896
(71) Applicant: Toyota Jidosha Kabushiki Kaisha, Toyota-shi, Aichi 471-8571 (JP)
(72) Inventor: HAMA, Yuichiro, Toyota-shi, Aichi 471-8571 (JP); KURUNGOT, Sreekumar, Toyota-shi, Aichi 471-8571 (JP)
(74) Representative: Kuhnen, Rainer K.
(86) International application number: PCT/JP2007/062359
(87) International publication number: WO 2007/145363

(57) **Abstract**

A tube-shaped solid polymer fuel cell is provided with communicating fuel gas channels 2 on the periphery of a bar-shaped current collector 1 and along the axis of the bar-shaped current collector 1 and the membrane-electrode assembly (MEA) 6 on the outside of the bar-shaped current collector 1 and the fuel gas channels 2 and has a structure in which a fuel gas flows through the fuel gas channels 2 and an oxide gas flows outside the membrane-electrode assembly (MEA) 6, wherein
some or all of the fuel gas channels 2 are filled with a porous material having communication pores along the axis thereof and a conductive particulate having resistance to corrosion is mixed in with the porous material.

The tube-shaped solid polymer fuel cell of the present invention makes it possible to improve gas flowability at the time of production of catalyst layers while avoiding infiltration of the gas channels by a catalyst ink so as to block the channels and thus lower cell resistance at the time of fuel cell operation. Thus, power generation performance is improved by the present invention.

## Description

### Technical Field

The present invention relates to a tube-shaped solid polymer fuel cell that uses a bar-shaped current collector and a method for producing the tube-shaped solid polymer fuel cell.

Fuel cells generate electrical energy that is directly converted and obtained from the chemical energy of fuel through electrochemical oxidation of fuel such as hydrogen or methanol within the cells. In recent years, fuel cells have been attracting attention as clean sources of electrical energy supply. In particular, the use of a solid polymer fuel cell in which a proton exchange membrane is used as an electrolyte enables obtainment of high power density and low-temperature operation. Thus, such solid polymer fuel cell is expected as a power source for mobile vehicles, in addition to a compact fuel cell such as a household stationary power source, a portable appliance, a transportable power source, or the like.

A conventional solid polymer fuel cell is composed by separately locating a catalyst layer to be used as a fuel electrode and a catalyst layer to be used as an air electrode (oxygen electrode) on both sides of an electrolyte (a planar plate or a flat membrane) and sandwiching the electrolyte with the use of a separator material made of carbon or metal, which is provided with channels through which a fuel gas and air (oxygen gas) flows, so as to produce a unit referred to as a unit cell. A separator is sandwiched between the cells, so as to play a role in preventing hydrogen that enters the fuel electrode from mixing with air that enters the air electrode when cells are stacked. The separator also plays a role as an electron conductive material for connecting the two cells in series. A fuel cell stack is combined via lamination of the necessary number of such unit cells. Furthermore, the fuel cell stack is integrated with an apparatus for supplying fuel and an oxidizer gas, a control apparatus, or the like to form a fuel cell. With the use of the fuel cell, electric power generation is performed.

However, although such a flat fuel cell configuration is appropriate for a design according to which a number of large-area electrodes (fuel electrodes and air electrodes) are stacked, it offers only a low degree of-freedom in terms of appearance and/or shape, and it does not allow response to demand for miniaturization. Recently, a design according to which only flat unit cells are arranged in parallel has been proposed. Such a case enables easy production of a compact chip and may have merit depending on the shape of the small appliance into which the cell is incorporated. It is hard to say that such design can cope flexibly with various shapes of small appliances. In particular, examples of problems that remain unsolved include how a fuel electrode is designed to enable effective fuel flow and how fuel leakage is prevented.

In this connection, JP Patent Publication (Kokai) No. 2003-297372 A discloses, for the purpose of providing a high-output fuel cell that can be easily miniaturized, preserves the airtightness of the fuel electrode, withstands high differential pressure, and has mechanical strength in addition to flexibility, a fuel cell that is produced by forming and using a tube-shaped (hollow) polymer electrolyte membranes (instead of using conventional flat polymer electrolyte membranes stacked via lamination) and by providing a carbon fiber carrying a catalyst on the tube internal surface (wall surface) and/or the tube external surface (wall surface) as a fuel electrode and an air electrode, respectively.

Moreover, JP Patent Publication (Kokai) No. 2002-124273 A discloses, for the purpose of miniaturization and/or achievement of lower cost through simplification of unit cell configuration, a solid polymer fuel cell that comprises a hollow-shaped gas diffusion electrode layer with an inside diameter ranging from 0.5 mm to 10 mm, a polymer solid electrolyte membrane layer formed in the periphery of the gas diffusion electrode layer, and a gas diffusion electrode layer formed in the periphery of the polymer solid electrolyte membrane layer.

Furthermore, a method for producing a tube-shaped solid polymer fuel cell, as an example of the conventional art, involves filling gas channels such as slits, pores, or the like installed on an inner current collector with a resin such as PVA after MEA production and then washing off the resin with a liquid such as water. However, such method has the following problems.
(1) Production steps become complicated, since a step of removing the resin used for filling is required.
(2) It is difficult to confirm whether or not the resin used for filling can be completely removed unless the fuel cell is cut or broken, since the resin is located within the tube-shaped fuel cell.

### Disclosure of the Invention

Tube-type fuel cells according to the conventional art exert a degree of effect in terms of miniaturization, but are problematic in terms of internal gas flowability. Hence, such fuel cells have limitations in power generation performance. Furthermore, such fuel cells are also problematic in terms of high electrical resistance during operation of the tube-type fuel cells, resulting in low power generation performance.

Accordingly, an object of the present invention is to provide a tube-type fuel cell having improved gas flowability resulting from the fact that catalyst layers can be produced without blocking the gas channels due to infiltration of the gas channels with a catalyst ink, and having improved power generation performance through suppression of the electrical resistance at the time of operation. An object of the same is to provide a method for producing such fuel cell.

The present inventors have discovered that the above objects can be achieved by filling some or all of the fuel gas channels of a bar-shaped current collector having a specific structure with a specific material. Thus, the present inventors have completed the present invention.

Specifically, first, the present invention relates to a tube-shaped solid polymer fuel cell which is provided with communicating fuel gas channels on the periphery of a bar-shaped current collector along the axis of the bar-shaped current collector and a membrane-electrode assembly (MEA) on the outside of the bar-shaped current collector and the fuel gas channels and has a structure in which a fuel gas flows through the fuel gas channels and an oxide gas flows outside the membrane-electrode assembly (MEA), wherein:
some or all of the fuel gas channels are filled with a porous material having communication pores along the axis thereof and conductive particulates having resistance to corrosion are mixed in with the porous material. The tube-shaped solid polymer fuel cell of the present invention makes it possible to:
   (1) improve power generation performance in a membrane-electrode assembly (MEA) since fuel gas smoothly penetrates in the porous material that fills in some or all of the fuel gas channels in addition to an oxide gas flowing outside the membrane-electrode assembly (MEA); and
   (2) improve power generation performance in a membrane-electrode assembly (MEA) since fuel gas channel parts of the inner current collector of the tube-typed fuel cell are not insulators and have electrical conductivity, so as to lower the contact resistance between the current collector and the membrane-electrode assembly (MEA).

In the present invention, regarding the shapes of the above fuel gas channels, the fuel gas channel is preferably one or more slits provided so that they open along the axis on the periphery of the bar-shaped current collector.

In the present invention, it is more preferable to provide in the porous material a graded structure in which the fine pore size increases from the periphery of the bar-shaped current collector toward the inner current collector side, since the resulting gas diffusivity and drainage are improved.

As porous materials in which conductive particulates having resistance to corrosion are mixed, which comprise the greatest characteristic of the tube-shaped solid polymer fuel cell of the present invention, various materials such as ceramics made of an inorganic material, a compression-molded product of an inorganic fiber, a molded product made of an inorganic material and an organic binding material, mica, a porous sintered product of an inorganic material, or nonwoven fabric of an inorganic fiber are used. Examples of such material include alumina and silica, and a particularly preferable example of the same is γ-alumina.

To impart conductivity to the above porous materials and thus to reduce the cell resistance at the time of fuel cell electric power generation, particulates having resistance to corrosion and conductivity are mixed in with the porous materials. As conductive particulates having resistance to corrosion, particulates having both conductivity and corrosion resistance can be broadly used. Of these, one or more types of particulate selected from among carbon black, gold, and platinum can be preferably exemplified.

The pore size of the fine pores of the above porous material is determined based on the relationship between the porous material and the particle size of the catalyst particulates in catalyst layers that come into contact with the porous material. A catalyst ink is applied for coating so as not to allow catalyst particulates to infiltrate fine pores of the porous material and thus block the fine pores. Accordingly, the pore size of the fine pores of the porous material preferably-ranges from 1 nm to 100 nm and more preferably ranges from 10 nm to 40 nm. The porosity of the porous material preferably ranges from 40% to 90% and more preferably ranges from 70% to 90%.

For the above bar-shaped current collector located in the central part of the tube-shaped solid polymer fuel cell of the present invention, various conductive materials are used. For example, metal materials or carbon materials are exemplified. Of them, gold is the most preferable.

Second, the present invention relates to a method for producing the above tube-shaped solid polymer fuel cell, comprising the steps of: forming communicating fuel gas channels on the periphery of a bar-shaped current collector along the axis of the bar-shaped current collector; filling some or all of the fuel gas channels of the bar-shaped current collector provided with the fuel gas channels with a porous material in which conductive particulates having resistance to corrosion are mixed; and producing a membrane-electrode assembly (MEA) outside the bar-shaped current collector and the fuel gas channels.

In the method for producing the tube-shaped solid polymer fuel cell of the present invention, the shape of the fuel gas channels, provision of a graded structure to the porous material so as to vary the fine pore size as desired, types of porous material, types of conductive particulate having resistance to corrosion, fine pore size, porosity, materials for the bar-shaped current collector, and the like are as described above.

In the present invention, when the porous material is γ-alumina, the step of filling with the porous material in which the above conductive particulates having resistance to corrosion are mixed preferably involves coating or filling the fuel gas channels with a γ-alumina paste in which conductive particulates having resistance to corrosion are mixed and then baking the product.

Furthermore, the secondary particle size of particles in the catalyst paste to be used for the above step of producing the membrane-electrode assembly (MEA) is preferably 100 nm or more, so as to avoid infiltration of the pores of the porous material.

Third, the present invention relates to the use of the above tube-shaped solid polymer fuel cell, which is characterized in that it is used as a power source for portable devices. The fuel cell of the present invention can be easily miniaturized, further has high output density, can be expected to have long-term durability, and can be easily handled. Therefore, the fuel cell can be used as a power source for portable electric and/or electronic devices such as telephones, video cameras, and laptop computers or for transportable electric and/or electronic devices.

According to the present invention, the following effects can be exerted since: communicating fuel gas channels are provided on the periphery of the bar-shaped current collector along the axis of the bar-shaped current collector; some or all of the fuel gas channels are filled with a porous material having communication pores along the axis of the channels; and conductive particulates having resistance to corrosion are mixed in with the porous material.
(1) A fuel gas smoothly penetrates in the porous material that fills some or all of the fuel gas channels, and an oxide gas flows outside the membrane-electrode assembly (MEA). As a result, power generation performance in the membrane-electrode assembly (MEA) is improved.
(2) Some or all of the fuel gas channels are filled with a porous material, so as to avoid infiltration of the gas channels by a catalyst ink at the time of catalyst layer production and the resulting blocking of the channels. Thus, gas flowability is improved, and this can cause improvement in power generation performance. Alternatively, productivity is improved, since there is no need to remove solid substances filling the gas channels after MEA production.
(3) Conductive particulates having resistance to corrosion are mixed in with the porous material, so as to make it possible to impart conductivity to γ-alumina and thus to lower the cell resistance at the time of fuel cell operation.
(4) Provision of a graded structure to the porous material via which the fine pore size increases from the periphery of the bar-shaped current collector to the inner current collector side, resulting in improved gas diffusivity and drainage. Thus, power generation performance is further improved.
(5) The tube-shaped solid polymer fuel cell of the present invention is a tube-shaped fuel cell with a bar-shaped current collector located in the center. Thus, the fuel cell can cope with miniaturization requirements. In addition to this advantage, through appropriate design of the bar-shaped current collector, tube length, and tube size and through appropriate connecting of units each composed of a tube, a fuel cell capable of dealing with various outputs can be obtained. Porous material portions filling the bar-shaped current collector are excellent in terms of airtightness, so that they are particularly suitable for composing a fuel electrode. In addition, the tube-shaped solid polymer fuel cell of the present invention not only has excellent shape flexibility, but also is capable of keeping strength. Thus, the problems of stack materials, which are problematic in the design of fuel cells, can be addressed.

### Brief Description of the Drawings

Figure 1 is a schematic view of the tube-shaped solid polymer fuel cell of the present invention.
Figure 2 is a sectional schematic view showing the outline of the steps for producing the tube-shaped solid polymer fuel cell of the present invention.
Figure 3 is a sectional schematic view showing a tube-typed fuel cell in which the inner current collector is directly coated with a catalyst paste.
Figure 4 is a sectional schematic view showing an example in which gas channels are filled in advance with a resin such as polyvinyl alcohol (PVA).
Figure 5 is a sectional schematic view showing a tube-typed fuel cell in which slits that are the gas channels of the inner current collector are filled with γ-alumina in which carbon black is mixed.
Figure 6 shows the relationship between the rate at which carbon powder is added to γ-alumina and cell resistance in a cell in which the inner current collector is coated with MEA by a dip-coating method.

Symbols are each described as follows:
1: Bar-shaped current collector, 2: Fuel gas channels filled with a porous material in which conductive particulates having resistance to corrosion are mixed, 3: Electrode catalyst layer, 4: Polymer electrolyte membrane, 5: Electrode catalyst layer, and 6: Membrane-electrode assembly (MEA).

### Best Mode for Carrying Out the Invention

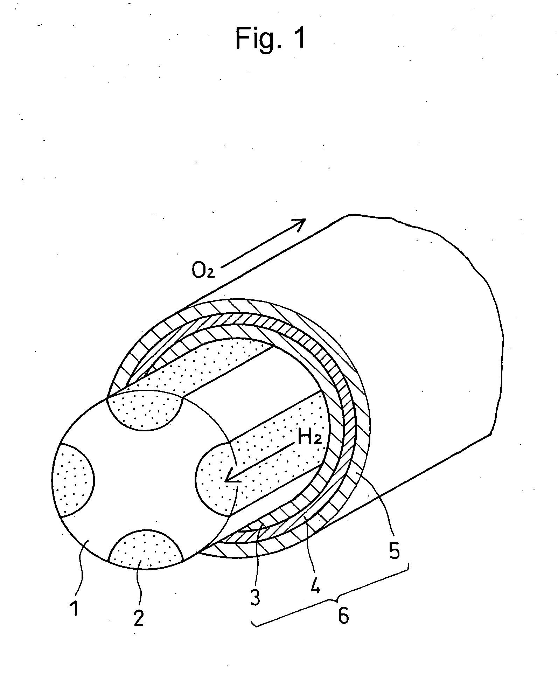

Figure 1 is a schematic view showing the tube-shaped solid polymer fuel cell of the present invention. Four slits that are communicating fuel gas channels 2 are provided on the periphery of a bar-shaped current collector 1 along the axis of the bar-shaped current collector 1. Furthermore, a tube-shaped membrane-electrode assembly (MEA) 6 composed of an electrode catalyst layer 3, a polymer electrolyte membrane 4, and an electrode catalyst layer 5 is located outside the bar-shaped current collector 1 and the fuel gas channels 2. Other current collectors (not shown) are located outside the membrane-electrode assembly (MEA) 6. The fuel gas channels 2 are filled with a porous material having communication pores along the axis of the channels, wherein conductive particulates having resistance to corrosion are mixed in with the porous material. A fuel gas (H₂) flows through the fuel gas channels 2 and an oxide gas (air or O₂) flows outside the membrane-electrode assembly (MEA) 6. In practice, the above fuel cell unit cells are stacked in parallel and/or in series.

In Fig. 1, all the fuel gas channels 2 are filled with a porous material in which conductive particulates having resistance to corrosion are mixed; However, some of the fuel gas channels 2 may be filled with such material. Moreover in Fig. 1, the fuel gas channels 2 are four slits that are provided on the periphery of and along the axis of the above bar-shaped current collector 1. However, the number of slits is not limited.

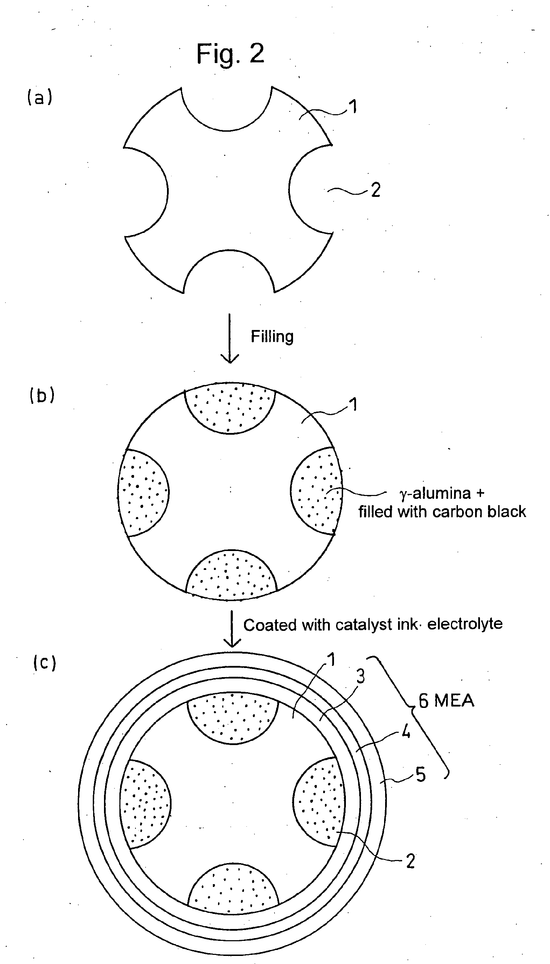

Figure 2 is a sectional schematic view showing the outline of the steps for producing the tube-shaped solid polymer fuel cell of the present invention. Communicating fuel gas channels 2 are formed on the periphery of a bar-shaped current collector 1 along the axis of the bar-shaped current collector 1 (Fig. 2(a)). Some or all of the fuel gas channels 2 of the bar-shaped current collector 1 (provided with the fuel gas channels 2) (all the fuel gas channels are filled in Fig. 2) are filled with γ-alumina, which is a porous material having communication pores along the axis of the fuel gas channels. Here, in the γ-alumina, conductive particulates having resistance to corrosion are mixed (Fig. 2(b)). Next, a tube-shaped membrane-electrode assembly (MEA)6 composed of an electrode catalyst layer 3, a polymer electrolyte membrane 4, and an electrode catalyst layer 5 is located outside the bar-shaped current collector 1 and the fuel gas channels 2, thereby producing a tube-shaped solid polymer fuel cell.

### Examples

The present invention will be described below in detail with reference to examples, comparative examples, and drawings.

### [Comparative example 1]

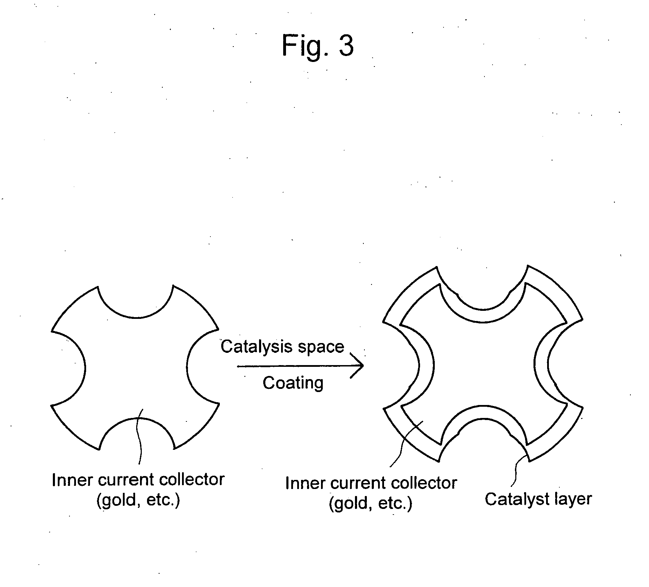

As shown in Fig. 3, an inner current collector in a tube-typed fuel cell is used as a substrate at the time of MEA production, in addition to achieve both electrical conductivity and gas diffusivity. When the inner current collector is directly coated with a catalyst paste, gas channels are covered with the paste. Hence, after MEA production, a problem arises such that gas fails to diffuse into catalyst layers or the channels are blocked at the time of power generation.

### [Comparative example 2]

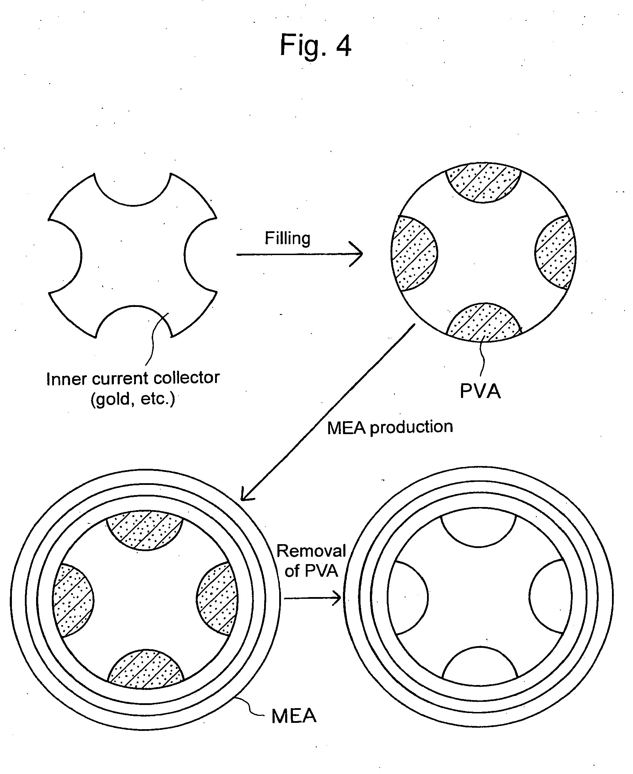

As shown in Fig. 4, conventionally, the gas channels are filled in advance with a resin such as polyvinyl alcohol (PVA), an MEA is produced, and then PVA is removed by dissolving it in a solvent such as water since PVA is a water-soluble resin, so as to clear gas channels at the time of electric power generation. However, it is difficult to confirm whether PVA can be completely removed, unless the MEA is broken. Furthermore, the need of such removal step results in lower productivity.

### [Comparative example 3]

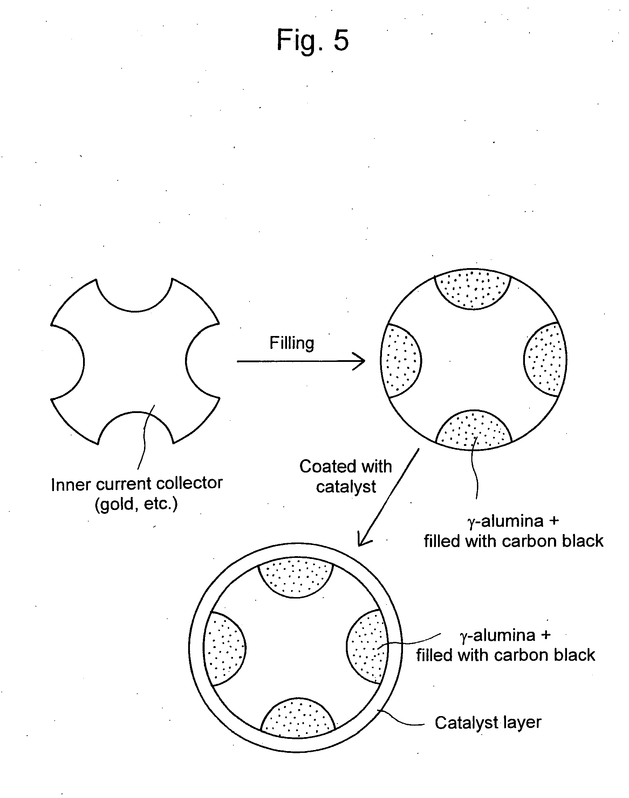

Figure 5 shows the structure of a tube-type fuel cell in which slits that are gas channels of an inner current collector are filled with γ-alumina. Figure 5 also illustrates a production method therefor. In this comparative example, to clear the gas channels of the inner current collector, the channels are filled with γ-alumina having fine pores. The thus obtained structure makes it possible to avoid infiltration of a catalyst paste at the time of MEA production, requires no removal step after MEA production, makes it possible to secure gas diffusivity at the time of electric power generation, and makes it possible to reduce cell resistance at the time of fuel cell operation.

Specifically, gas channels of an inner current collector are coated with a γ-alumina solution that is prepared by a general preparation method involving a dip-coating method.

### [Example 1]

Similar to comparative example 3, Fig. 5 shows a structure in which slits that are gas channels of an inner current collector in a tube-typed fuel cell are filled with γ-alumina in which conductive particulates having resistance to corrosion are mixed. Figure 5 also illustrates the production method thereof. In the present invention, to clear the gas channels of the inner current collector and to secure the conductivity of the gas channels, these channels were filled with γ-alumina having fine pores, in which conductive particulates having resistance to corrosion are mixed. The thus obtained structure can prevent infiltration of a catalyst paste at the time of MEA production, can secure the gas diffusivity at the time of electric power generation without requiring any removal step after MEA production, and can reduce cell resistance at the time of fuel cell operation.

Specifically, conductive particulates having resistance to corrosion, such as carbon powders (e.g., Ketjen EC), are mixed in with a γ-alumina solution prepared by a general preparation method and then the gas channels of the inner current collector are coated with the product by a dip-coating method. The pore size of the fine pores of γ-alumina ranges from 1 nm to 100 nm and desirably ranges from 10 nm to 40 nm. The porosity of γ-alumina ranges from 40% to 90% and desirably ranges from 70% to 90%. It is known that the secondary particle size of particles in a catalyst paste using platinum-carrying carbon as a catalyst is 100 nm or more. With the above fine pore size of γ-alumina, infiltration by the catalyst can be prevented.

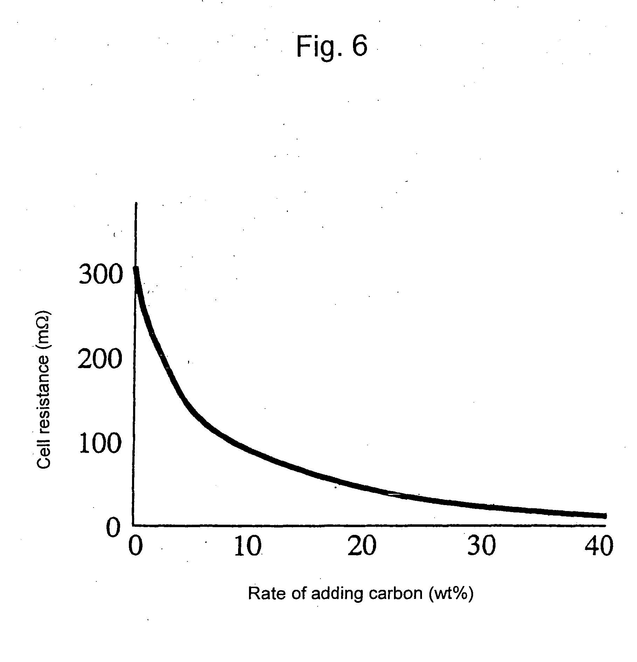

Fig. 6 shows the relationship between the rate at which carbon powder is added to γ-alumina and cell resistance in a cell in which the inner current collector is coated with MEA by a dip-coating method.

It can be understood from Fig. 6 that cell resistance was significantly decreased when the rate at which carbon powder is added to γ-alumina was increased.

### Industrial Applicability

According to the tube-shaped solid polymer fuel cell of the present invention, a fuel gas smoothly penetrates a porous material (in which conductive particulates having resistance to corrosion are mixed) that fills some or all of the fuel gas channels. This can prevent a catalyst ink from infiltrating and thus blocking the gas channels at the time of production of catalyst layers, so that gas flowabillity can be improved. Furthermore, power generation performance is improved. In particular, conductive particulates having resistance to corrosion are mixed in with such a porous material, so that electrical conductivity can be imparted to γ-alumina and cell resistance can be lowered at the time of fuel cell operation. Therefore, the present invention contributes to practical applications and broad use of fuel cells.

## Claims

1. A tube-shaped solid polymer fuel cell, which is provided with communicating fuel gas channels on the periphery of a bar-shaped current collector along the axis of the bar-shaped current collector and a membrane-electrode assembly (MEA) on the outside of the bar-shaped current collector and the fuel gas channels and has a structure in which a fuel gas flows through the fuel gas channels' and an oxide gas flows outside the membrane-electrode assembly (MEA), wherein
some or all of the fuel gas channels are filled with a porous material having communication pores along the axis thereof and a conductive particulate having resistance to corrosion is mixed in with the porous material.

2. The tube-shaped solid polymer fuel cell according to claim 1, wherein the fuel gas channel is one or more slits provided on the periphery of and along the axis of the bar-shaped current collector.

3. The tube-shaped solid polymer fuel cell according to claim 1 or 2, wherein a graded structure is provided to the porous material, in which
the fine pore size becomes larger from the periphery of the bar-shaped current collector towards the inner current collector side.

4. The tube-shaped solid polymer fuel cell according to any one of claims 1 to 3, wherein the porous material is γ-alumina.

5. The tube-shaped solid polymer fuel cell according to any one of claims 1 to 4, wherein the conductive particulate having resistance to corrosion is one or more types of particulate selected from among carbon black, gold, and platinum.

6. The tube-shaped solid polymer fuel cell according to any one of claims 1 to 5, wherein the pore size of the fine pores of the porous material ranges from 1 nm to 100 nm and the porosity of the same ranges from 40% to 90%.

7. The tube-shaped solid polymer fuel cell according to any one of claims 1 to 6, wherein the bar-shaped current collector is made of a metal material or a carbon material.

8. A method for producing a tube-shaped solid polymer fuel cell, comprising the steps of:
forming communicating fuel gas channels on the periphery of a bar-shaped current
collector along the axis of the bar-shaped current collector;
filling some or all of the fuel gas channels of the bar-shaped current collector provided
with the fuel gas channels with a porous material in which conductive particulates having
resistance to corrosion are mixed; and
producing a membrane-electrode assembly (MEA) outside the bar-shaped current collector
and the fuel gas channels.

9. The method for producing a tube-shaped solid polymer fuel cell according to claim 8, wherein the step of forming the fuel gas channels involves forming one or more slits on the periphery of and/or along the axis of the bar-shaped current collector.

10. The method for producing a tube-shaped solid polymer fuel cell according to claim 8 or 9, wherein a graded structure is provided to the porous material, in which
the fine pore size increases from the periphery of the bar-shaped current collector towards the inner current collector side.

11. The method for producing a tube-shaped solid polymer fuel cell according to any one of claims 8 to 10, wherein the step of filling with the porous material involves coating or filling the fuel gas channels with a γ-alumina paste in which conductive particulates having resistance to corrosion are mixed and then baking the product.

12. The method for producing a tube-shaped solid polymer fuel cell according to any one of claims 8 to 11, wherein the conductive particulate having resistance to corrosion is one or more types of particulate selected from among carbon black, gold, and platinum.

13. The method for producing a tube-shaped solid polymer fuel cell according to any one of claims 8 to 12, wherein the pore size of the fine pores of the porous material ranges from 1 nm to 100 nm and the porosity of the same ranges from 40% to 90%.

14. The method for producing a tube-shaped solid polymer fuel cell according to any one of claims 8 to 13, wherein the bar-shaped current collector is made of a metal material or a carbon material.

15. The method for producing a tube-shaped solid polymer fuel cell according to any one of claims 8 to 14, wherein the secondary particle size of particles in the catalyst paste to be used for the step of producing the membrane-electrode assembly (MEA) is preferably 100 nm or more.
